Europäisches Patentamt

European Patent Office

Office européen des brevets

(19)

(11) Veröffentlichungsnummer: **0 029 916**
**B1**

(12)
# EUROPÄISCHE PATENTSCHRIFT

(45) Veröffentlichungstag der Patentschrift:
02.11.83

(51) Int. Cl.³: **F 16 D 55/224**

(21) Anmeldenummer: 80106523.6

(22) Anmeldetag: 24.10.80

(54) Scheibenbremse, insbesondere für Kraftfahrzeuge.

(30) Priorität: 30.11.79 DE 2948284

(43) Veröffentlichungstag der Anmeldung:
10.06.81 Patentblatt 81/23

(45) Bekanntmachung des Hinweises auf die Patenterteilung:
02.11.83 Patentblatt 83/44

(84) Benannte Vertragsstaaten:
DE FR IT NL SE

(56) Entgegenhaltungen:
DE - B - 1 232 486
DE - B - 1 425 367
US - A - 3 185 263
US - A - 3 819 015
US - A - 3 830 343

(73) Patentinhaber: Knorr-Bremse GmbH, Moosacher Strasse 80, D-8000 München 40 (DE)

(72) Erfinder: Bieker, Dieter, Fichtenstrasse 86, D-5630 Remscheid (DE)
Erfinder: Stein, Werner, Birkenstrasse 4, D-5630 Remscheid (DE)

## Scheibenbremse, insbesondere für Kraftfahrzeuge

Die Erfindung betrifft eine Scheibenbremse nach dem Gattungsbegriff des Patentanspruches 1.

Bei bekannten Scheibenbremsen der in Rede stehenden Art (DE-B-1 232 486) sind im Bremssattel Zuspannorgane angeordnet, welche entweder hydraulische bzw. pneumatische oder mechanische Beaufschlagung aufweisen. Diese Zuspannorgane sind zwangsläufig mit den Druckleitungen oder, wenn mechanisch betätigt, mit dem zugehörigen Druckluft- oder Federspeicherzylinder verbunden.

Der Nachteil derartiger Konstruktionen liegt darin, dass beim Belagwechsel diese Verbindungen gelöst werden müssen oder dass sie zumindest ein Hindernis für schnelles Arbeiten darstellen. Ausserdem besteht die Gefahr, dass die im Bereich der Verbindung vorliegenden Dichtelemente beschädigt werden können.

Mit der US-A-3 830 343 ist eine Scheibenbremsanordnung für Kraftfahrzeuge bekanntgeworden, bei welcher in Abstand zueinander auf einem Achsrohr ein Bremszylinder und ein eine Bremsscheibe umgreifender Bremssattel gehaltert sind. Sowohl der Bremszylinder wie auch der Bremssattel sind voneinander unabhängig axial verschieblich auf dem Achsrohr befestigt. Am Bremssattel sind zwei Winkelhebel in ihrem Winkelbereich um zum Achsrohr quer verlaufende Drehachsen drehbar gelagert, deren eine Schenkelenden auf einen im Bremssattel verschieblichen Bremsbelag in Andrückrichtung an eine Bremsscheibe einzuwirken vermögen und deren andere Schenkelenden miteinander verbunden und mit der Kolbenstange des Bremszylinders gekoppelt sind. Das Gehäuse des Bremszylinders ist mit dem Bremssattel mittels einer Stange verbunden, welche diese beiden Teile auf konstantem Abstand hält. Bei dieser Scheibenbremsanordnung ist es zum Abnehmen des Bremssattels nicht nur erforderlich, gemäss der Beschreibung der US-A-3 830 343 die Bolzen für die Schiebelagerung des Bremssattels zu entfernen, es müssen des weiteren auch Verbindungen zu der Stange und zur Kolbenstange gelöst werden. Insbesondere die Befestigungsschrauben der Stange sind dabei ungünstig und nur schwer zugänglich am Bremssattel angeordnet, wodurch das Abnehmen des Bremssattels erheblich erschwert wird.

Die US-A-3 185 263 zeigt eine Scheibenbremse mit einem beweglichen Bremssattel, der zusätzlich zur Bremsscheibe und die an diese anpressbaren Bremsbeläge auch noch einen fest gelagerten Zylinder übergreift, in welchem sich zwei gegenläufige Kolben befinden. Der eine dieser Kolben wirkt auf einen im Bremssattel verschieblich gelagerten Bremsbelag, der andere Kolben auf einen Schenkel des Bremssattels. Zusätzlich ist am Bremssattel ein Hebel einer mechanischen Zuspannvorrichtung gelagert, welche durch eine im Bremssattel angeordnete, schlitzartige Durchbrechung greift. Ein Abheben des langen, die Zugänglichkeit zum Zylinder behindernden Bremssattels ist nur nach Demontage der mechanischen Zuspannvorrichtung möglich.

Die DE-B-1 425 367 zeigt eine Scheibenbremse mit auf einem Achsrohr quer zu diesem befestigten Bremszylinder, dessen Kolbenstange mit einem Drehhebel an einer parallel zum Achsrohr verlaufenden, längenveränderlich ausgebildeten Welle gekoppelt ist. Die Welle ragt abgedichtet in einen Radzylinder an einem axialverschieblich am Achsrohr gehalterten Bremssattel; sie ist einerseits über einen Schraubtrieb am Boden des Radzylinders gelagert und endet anderseits vor der Innenwand des Radzylinderkolbens, derart, dass sie bei Drehung beide auseinanderspreizen kann. Der Bremssattel mit dem integrierten Radzylinder kann erst nach Demontage zumindest eines Teiles der Welle und eventuell des Druckmittelanschlusses des Radzylinders abgenommen werden.

Demgegenüber besteht die Aufgabe der Erfindung darin, eine Scheibenbremse der eingangs genannten Art so auszubilden, dass das Auswechseln der Bremsbeläge bzw. deren Wartung auf äusserst einfache Weise vollzogen werden kann, ohne dass Demontage- bzw. Montagearbeiten an den mechanischen oder hydraulischen Zuspannorganen erforderlich wären. Dabei sollen die Vorteile einiger der bekannten Scheibenbremsanordnungen – kleiner, kurzer Bremssattel und gute Zugänglichkeit zu den Zuspannorganen – beibehalten werden.

Die Lösung dieser Aufgabe besteht aus den Merkmalen des Kennzeichnungsteils des Patentanspruches 1. Durch die bauliche Trennung der hydraulischen oder mechanischen Zuspannorgane vom diese mit seiner Ausnehmung umfassenden Bremssattel ist es möglich, letzteren auf einfache Weise von der Bremsscheibe zu lösen, d.h. abzuheben oder abzuschwenken, ohne dass Demontagearbeiten an den Zuspannorganen erforderlich sind.

Vorteilhafte Ausgestaltungen und Weiterbildungen sind in den Unteransprüchen aufgeführt.

Die Erfindung ist nachfolgend anhand von Ausführungsbeispielen unter Bezugnahme auf die beigefügte Zeichnung erläutert.

Fig. 1 ist eine schematische Ansicht der erfindungsgemässen Scheibenbremse mit mechanischer Zuspannung;

Fig. 2 ist eine der Fig. 1 vergleichbare Ansicht bei Verwendung einer hydraulischen Zuspannung;

Fig. 3 und 4 sind Teilschnittansichten der Scheibenbremse unter Darstellung der Möglichkeiten der Demontage des Bremssattels.

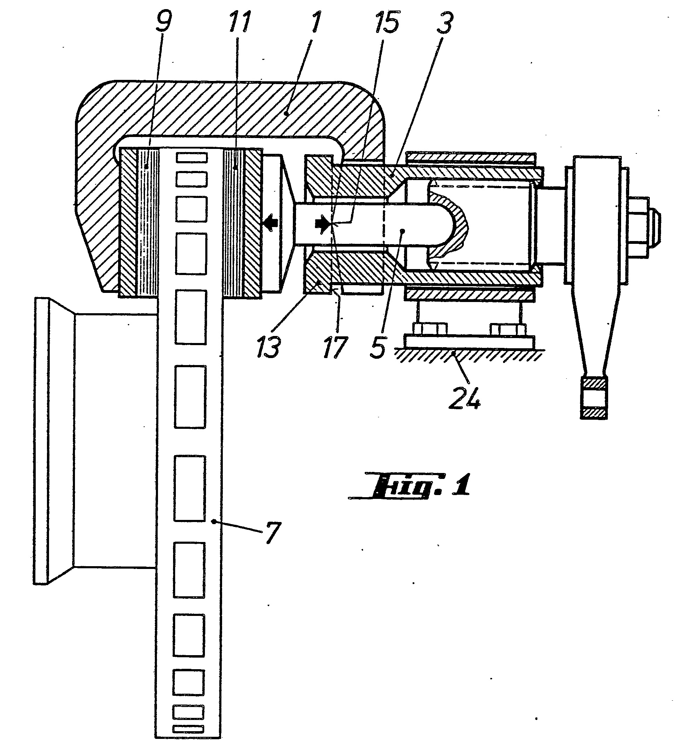

In Fig. 1 der Zeichnung ist eine Scheibenbremse dargestellt, welche mechanisch betätigbar ist. Die Scheibenbremse ist mit einem Bremssattel 1 versehen, welcher in an sich bekannter Weise U-Querschnittsform besitzt. Der Bremssattel 1 umfasst an dem in Fig. 1 rechten Schenkel einen Zylinder 3, in welchem ein durch eine mechanische Betätigung verschiebbarer Stössel 5 geführt ist. Der Stössel 5 wird infolge seiner Verschraubung mit einem entsprechenden Innengewinde des Zylinders 3 in Richtung der Bremsscheibe 7 oder von dieser abgewandt bewegt, so dass der Aussenbremsbelag 9 und der Innenbremsbelag 11 an die Bremsscheibe angepresst bzw. von dieser gelöst werden. Das gemäss Darstellung linke Ende des Zylinders 3 wirkt als Reaktionselement, d.h. in Form eines Zugstückes 13, welches bei mechanischer Betätigung der Scheibenbremse an der zugewandten Reaktionsfläche des Bremssattels 1 zur Wirkung gelangt, derart, dass sowohl der Aussenbremsbelag als auch der Innenbremsbelag im wesentlichen gleichzeitig angepresst werden können. Im dargestellten Ausführungsbeispiel weist die Anlagefläche des Bremssattels 1 die Form einer Dachkante 15 auf, welche an der entsprechenden Anlagefläche 17 des Zugstückes 13 anliegt, derart, dass immer eine definierte Krafteinleitung in den Bremssattel gegeben ist. Da die Zuspannelemente schwimmend gelagert sind, können sich also die Reaktionskräfte am Aussen- und Innenbremsbelag auswirken.

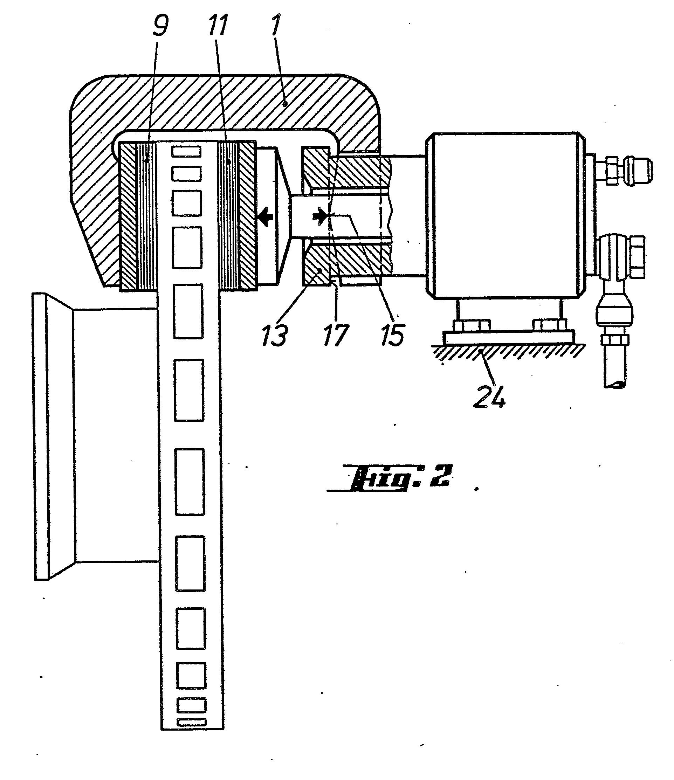

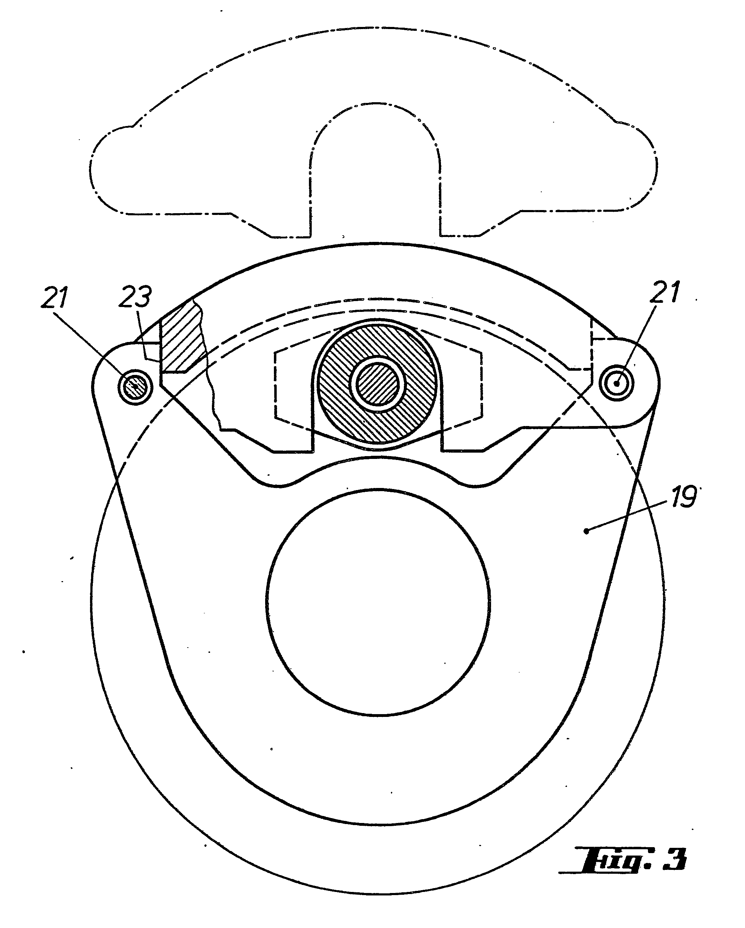

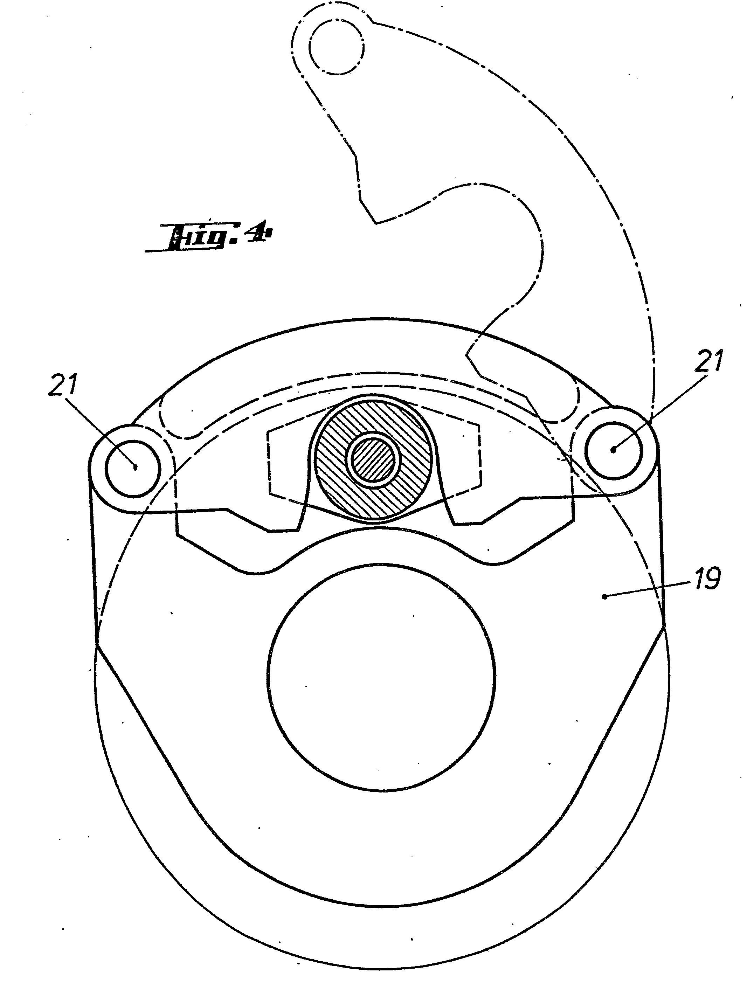

In Fig. 2 ist eine entsprechende, durch Druckmittel 1 beaufschlagbare Scheibenbremse dargestellt, bei welcher der Bremssattel 1 wie im Falle der Ausführungsform nach Fig. 1 den Zylinder 3 umfasst. Fig. 1 und 2 veranschaulichen, dass der gemäss Darstellung rechte Schenkel des Bremssattels 1 an der Unterseite offen ist, wodurch es möglich ist, den Bremssattel in der aus Fig. 3 bzw. 4 ersichtlichen Weise vom dargestellten Bremssattelträger 19 abzuheben bzw. abzuschwenken. Für den Fall, dass die Lagerzapfen gemäss Fig. 3 nicht als Momentenstütze zwischen Bremssattelträger und Bremssattel dienen, ist ein radiales Abnehmen des Bremssattels nach Entfernen beider Lagerzapfen 21 erforderlich, da die Momentenstütze 23 in dargestellter Weise durch Führungsflächen am Bremssattel und am Bremssatteltäger gebildet ist. Bei der Ausführungsform nach Fig. 4, bei welcher die Lagerzapfen 21 nicht als Drehmomentenstütze dienen, genügt das Entfernen eines Lagerzapfens 21, um nachfolgend den Bremssattel, wie dargestellt, herauszuschwenken. Nach dem Abheben des Bremssattels bzw. nach dessen Herausschwenken ist es ohne weiteres möglich, die Bremsbeläge auszutauschen bzw. zu untersuchen. Diese Arbeiten sind durchführbar, ohne dass es erforderlich wäre, an den mechanischen oder pneumatischen/hydraulischen Zuspannelementen der Scheibenbremse Demontagearbeiten durchzuführen.

Den Konstruktionen nach Fig. 1 und 2 ist somit gemeinsam, dass sowohl die Zuspannelemente der Scheibenbremse als auch der Bremssattel unabhängig voneinander gehalten sind; die mechanischen und pneumatischen/hydraulischen Zuspannelemente sind gemäss Darstellung im allgemeinen innerhalb eines Gehäuses in Form des Zylinders 3 geführt, welches einerseits an einem eigenen Bremsträger 24 gehalten ist, unabhängig davon, auf welche Weise sich die Relativbewegung zwischen den Zuspannorganen bzw. dem Gehäuse der Zuspannorgane und dem Bremssattel vollzieht. Anstelle des dargestellten Bremsträgers 24 kann als Halterung für die Zuspannorgane auch die Achse oder ein anderes Bauteil des Kraftfahrzeugs verwendet werden.

**Patentansprüche**

1. Scheibenbremse, insbesondere für Kraftfahrzeuge, mit einem im Querschnitt U-förmigen, die Bremsscheibe umfassenden, beweglichen Bremssattel (1), an dessen einem Schenkel das die mechanischen oder druckmittelbetätigbaren Zuspannorgane aufnehmende Gehäuse (3) geführt ist, wobei das Gehäuse (3) an einem Bremsträger (24) bzw. an der Achse des Kraftfahrzeuges gehaltert ist, dadurch gekennzeichnet, dass der Bremssattel (1) unabhängig vom Bremsträger an einem Bremssattelträger (19) angeordnet ist, und dass der Schenkel des Bremssattels mittels einer an ihm ausgebildeten, U-förmigen Ausnehmung das Gehäuse (3) von aussen her umfasst, derart, dass der Bremssattel (1) vom Gehäuse abhebbar oder abschwenkbar ist.

2. Scheibenbremse nach Anspruch 1, dadurch gekennzeichnet, dass der Bremssattel (1) mittels zweier am Bremssattelträger (19) angeordneter Lagerzapfen (21) gehalten und nach Lösen eines Lagerzapfens vom Gehäuse (3) abschwenkbar ist.

3. Scheibenbremse nach Anspruch 1 oder 2, bei welcher Anlageflächen am Bremssatteltäger und am Bremssattel die Drehmomentenstütze bilden, dadurch gekennzeichnet, dass der Bremssattel nach Lösen beider Lagerzapfen (21) vom Gehäuse (3) abhebbar ist.

4. Scheibenbremse nach Anspruch 1, dadurch gekennzeichnet, dass das ein Zugstück (13) darstellende Gehäuse (Zylinder 3) mit einer Anlagefläche (17) an einer die Form einer Dachkante (15) aufweisenden Anlagefläche des Bremssattels (1) anliegt.

**Claims**

1. Disc brake, particularly for motor vehicles, comprising a sectionally U-shaped, movable brake caliper (1) which embraces the brake disc and one leg of which serves to guide the housing (3) holding the mechanical or pressure-actuated clamping members, the housing (3) being supported by a brake carrier (24) or the axle of the motor vehicle, wherein the brake caliper (1) is located independently of the brake carrier on a brake caliper carrier (19) and wherein the leg of the brake caliper embraces the housing (3) from outside by means of a U-shaped recess provided in it, such that the brake caliper (1) can be lifted off or swung away from the housing.

2. Disc brake as defined in Claim 1, wherein the brake caliper (1) is supported by means of two bearing pins (21) located on the brake caliper carrier (19) and can be swung away from the housing (3) after a bearing pin has been released.

3. Disc brake as defined in Claim 1 or 2, in which contact surfaces on the brake caliper carrier and brake caliper form the torque support, wherein the brake caliper can be lifted off the housing (3) after both bearing pins (21) have been released.

4. Disc brake as defined in Claim 1, wherein the housing (cylinder 3) which represents a tie piece (13) rests with one contact surface (17) on a brake caliper contact surface having the form of a ridge (15).

## Revendications

1. Frein à disque, en particulier pour véhicules automobiles, comportant un étrier de frein (1) de section transversale en U, entourant le disque de frein et à l'une des branches duquel est associé le boîtier (3) dans lequel sont montés les organes mécaniques ou actionnés par un milieu sous pression, ledit boîtier (3) étant monté sur un support de frein (24) ou sur l'essieu du véhicule, caractérisé par le fait que l'étrier de frein (1) est disposé sur un support d'étrier de frein (19) indépendant du support de frein, et que la branche de l'étrier de frein entoure à l'extérieur et à l'aide d'une encoche en U qui y est formée, le boîtier (3) de manière que l'étrier de frein (1) puisse être soulevé du boîtier ou en être dégagé par pivotement.

2. Frein à disque selon la revendication 1, caractérisé par le fait que l'étrier de frein (1) est supporté par deux tourillons (21) disposés sur le support de l'étrier de frein (19) et qu'il peut être basculé dans sa position de dégagement par rapport au boîtier (3) après enlèvement d'un tourillon.

3. Frein à disque selon la revendication 1 ou 2, dans lequel des surfaces d'appui du support d'étrier de frein et de l'étrier de frein forment l'appui pour le couple de rotation, caractérisé par le fait que l'étrier peut être soulevé du boîtier (3) après enlèvement des deux tourillons (21).

4. Frein à disque selon la revendication 1, caractérisé par le fait que le boîtier (cylindre 3) qui représente une pièce de traction (13) porte, par une surface d'appui (17), sur une surface d'appui de l'étrier de frein (1), qui a la forme d'un faîte d'un toit (15).

**Fig. 1**

*Fig. 2*

21  23

21

19

*Fig. 3*

*Fig. 4*

21

21

19